# EUROPEAN PATENT APPLICATION

(11) **EP 2 537 742 A2**
(43) Date of publication of application: **26.12.2012**
(21) Application number: 12171875.3
(22) Date of filing: 13.06.2012
(51) Int. Cl.: B63B 1/36, B64C 21/00

(54) **THE METHOD OF REDUCING RESISTANCE OF STREAMLINED BODY OF A VEHICLE AND ITS APPLICATIONS**

(30) Priority: 21.06.2011 TW 100121530
(71) Applicant: Mei, Chen-Hsin, New Taipei City 234 (TW)
(72) Inventor: Mei, Chen-Hsin, New Taipei City 234 (TW)
(74) Representative: Lang, Christian

(57) **Abstract**

A method of reducing resistance of streamlined body of a vehicle and its applications is provided, wherein one or more raised structures are configured between the widest point and the caudal end of a streamlined body, and a gap can be configured between such raised structures. In this way, the raised structure can impede and guide the boundary layer of the fluid to exert more pressure on the caudal end of the streamlined body thereby reducing resistance to which the streamlined body may be subject. The present invention can be applied to various streamlined bodies in order to increase the speed of a cruising streamlined body.

## Description

### BACKGROUND OF THE INVENTION

### 1. Field of the Invention

The present invention generally relates to a method of reducing resistance of a streamlined body and its applications. Especially, the method refers at least one raised structure configured on a streamlined vehicle for increasing the pressure on its caudal end during its cruising, so that it can facilitate resistance reduction in certain applications thereof.

### 2. Description of Related Art

One of the major factors that influence the travelling speed of a vehicle is fluid resistance to which it is subject during cruising. Such resistance may not only cause the vehicle to consume more energy (e.g., thermal energy or electric energy), but the driving mechanism and transmitting mechanism thereof will also suffer more burden, extra energy loss and time loss. Consequently, the resistance will produce extra waste gas or heat, causing pollution as well as inefficiency with regard to both energy cost and operation time for transportation companies.

Conventional ways for resistance reduction of a moving object include profiling the hull surface of a vessel, an aircraft or an automobile as of a smooth and streamlined shape. It can reduce the surface pressure on the front of the hull and simultaneously increase the surface pressure on the rear thereof such that the pressure difference between the front portion and the rear portion of the hull can be effectively lowered. The overall resistance can be reduced in such a way that a vehicle may encounter as travelling in a fluid, thereby improving its speed or saving its energy.

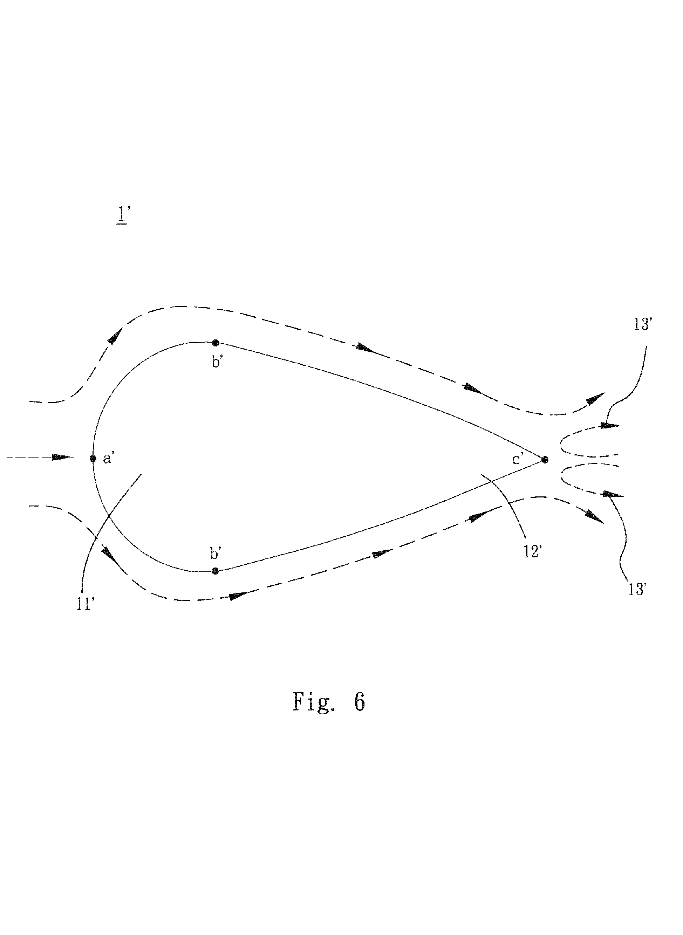

Although a streamlined design can be helpful for reducing resistance, such an approach can actually provide limited effects with regard to resistance reduction. Refer to Fig. 6 where a diagram indicates the fluid flow of a prior art vessel travelling in water. It can be seen that, for the vessel 1', from the point a' at the bow 11' to the widest point b' and then, through the body, to the point c' at the stern 12', there exists an extreme thin boundary layer which can transfer pressure from exterior layers. Herein the point c' indicates a separation point, and fluid particles leave the vessel 1' at this point and then form a trace flow 13' in the vicinity of the stern; i.e., from the high pressure area at the point a' to the low pressure area at the point b', and subsequently from the low pressure area at the point b' to the high pressure area at the point c'. The fluid around the front end 11' exerts higher pressure on the vessel 1' but the fluid near the rear end 12' applies lower pressure thereto; as such, this pressure difference becomes a resistive force to the advancement of the vessel therefore needs to be reduced in order to improve the travelling speed of the vessel.

Regarding such issue, the inventor of the present invention intend to provide a method of reducing resistance of a streamlined body and its applications, which uses the raised structures specially installed to increase the fluid pressure exerted on the low pressure area at the caudal end of the streamlined body for reducing the resistance to which the streamlined body is subject. According to the original research motivations of the present invention, it is intended to be applied comprehensively to various streamlined body of vehicles so as to improve their speed during movement.

### SUMMARY OF THE INVENTION

The major objective of the present invention is to provide a method of reducing resistance of a streamlined body and its applications, wherein at least one raised structure to be installed on the caudal end of the streamlined body so that the fluid pressure on the caudal surface can be increased by means of the raised structure, thereby reducing resistance of which the streamlined body will encounter during movement.

Another objective of the present invention lies in providing a method of reducing resistance of a streamlined body and its applications, which can be widely applied to various streamlined vehicles such as a vessel, an aircraft or an automobile and the like.

To successfully achieve the aforementioned goals, the present invention discloses a method of reducing resistance of a streamlined body and its applications, wherein one or more raised structures are configured between the widest point and the caudal end of a streamlined body, and a gap can be configured between such raised structures. By such a method, the raised structure can hinder the boundary layer and guide the fluid to increase pressure on the caudal end of the streamlined body for reducing resistance to which the streamlined body is subject in cruising. The present invention can be comprehensively applied on various streamlined bodies so as to improve their travelling speed.

### BRIEF DESCRIPTION OF THE DRAWINGS

Fig. 1 shows a cross-section view for a streamlined body of a vehicle according to a preferred embodiment of the present invention.

Fig. 2A shows a diagram for the fluid in Fig. 1 passing by the raised structures.

Fig. 2B shows another diagram for the fluid in Fig. 1 passing by the raised structures.

Fig. 2C shows a diagram for the fluid flow of a prior art without installation of the raised structures.

Fig. 3A shows a stereo diagram of the raised structures according to present invention.

Fig. 3B shows another stereo diagram of the raised structures according to present invention.

Fig. 4A shows an application diagram of the raised structures on a vessel according to preferred embodiment of the present invention.

Fig. 4B shows bottom view for Fig. 4A.

Fig. 5A shows top view of the raised structures on an aircraft according to preferred embodiment of the present invention.

Fig. 5B shows a stereo diagram of the raised structures on an aircraft according to preferred embodiment of the present invention.

Fig. 5C shows a cross-section view for Fig. 5A along the X-X' direction.

Fig. 5D shows a cross-section view for the hull of an aircraft without installation of the raised portions.

Fig. 6 shows a diagram of the fluid flow around prior art vessel travelling in water.

### DETAILED DESCRIPTION OF THE PREFERRED EMBODIMENTS

Other characteristics of the present invention as well as embodiments thereof can be further appreciated through following detailed descriptions in conjunction with the appended drawings.

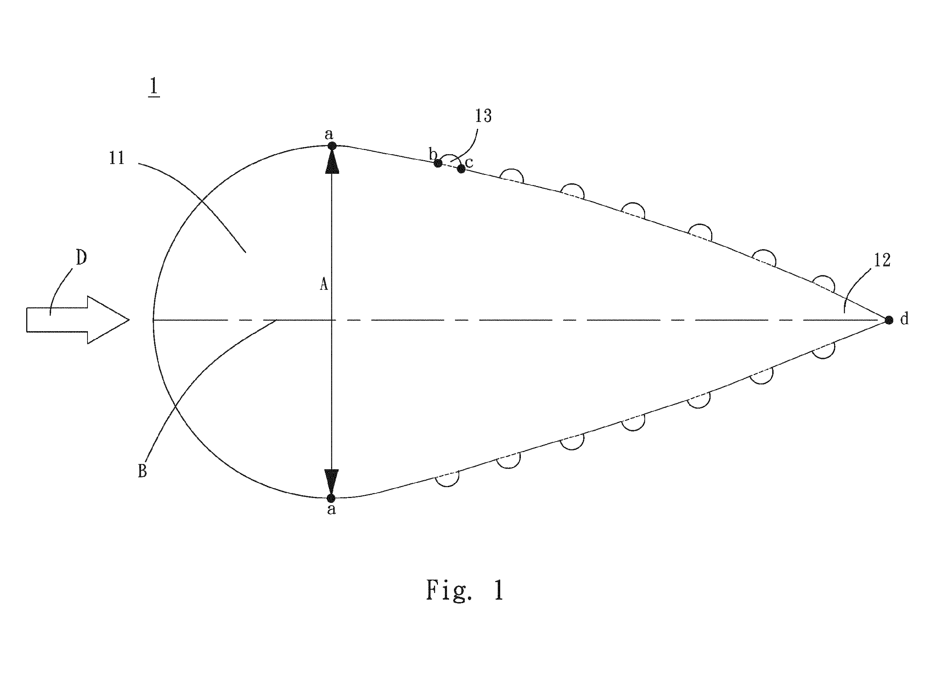

Refer to Fig. 1, wherein a cross-section view of a streamlined body according to a preferred embodiment of the present invention is shown. The method of reducing resistance of a streamlined body according to the present invention is to install one or more raised structures 13 on the surface between the widest point A and the caudal end 12 of the streamlined body 1; in other word, at least one raised structure 13 is configured between the point a and the point d, and the caudal end 12 of the streamlined body 1 indicates the end position where the fluid passes by the streamlined body 1. In the present embodiment, the flow direction D of the fluid heads toward the right side, so the end position of the streamlined body 1 is the caudal end 12. Herein a gap can be configured between every two raised structures 13.

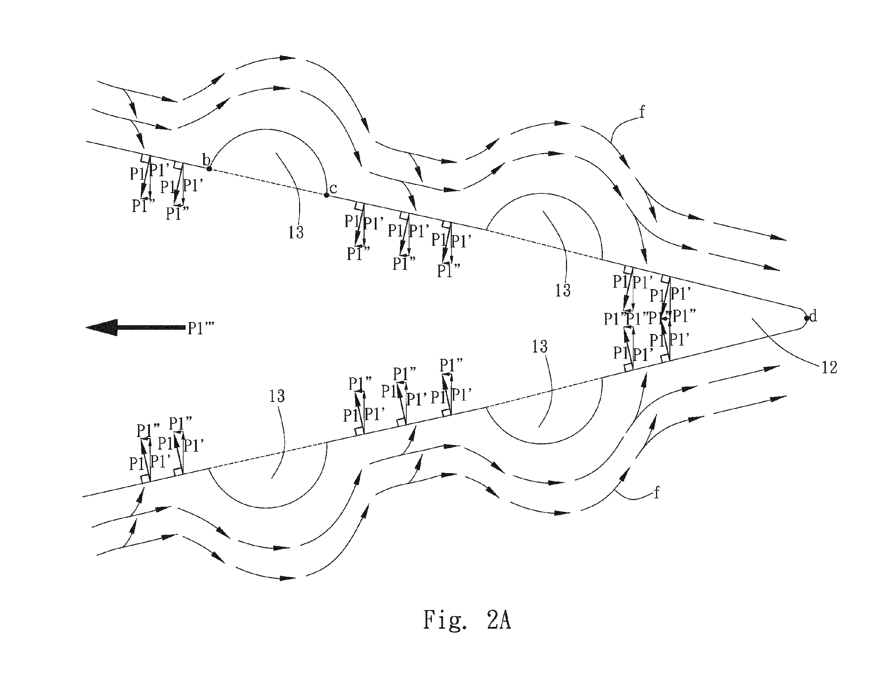

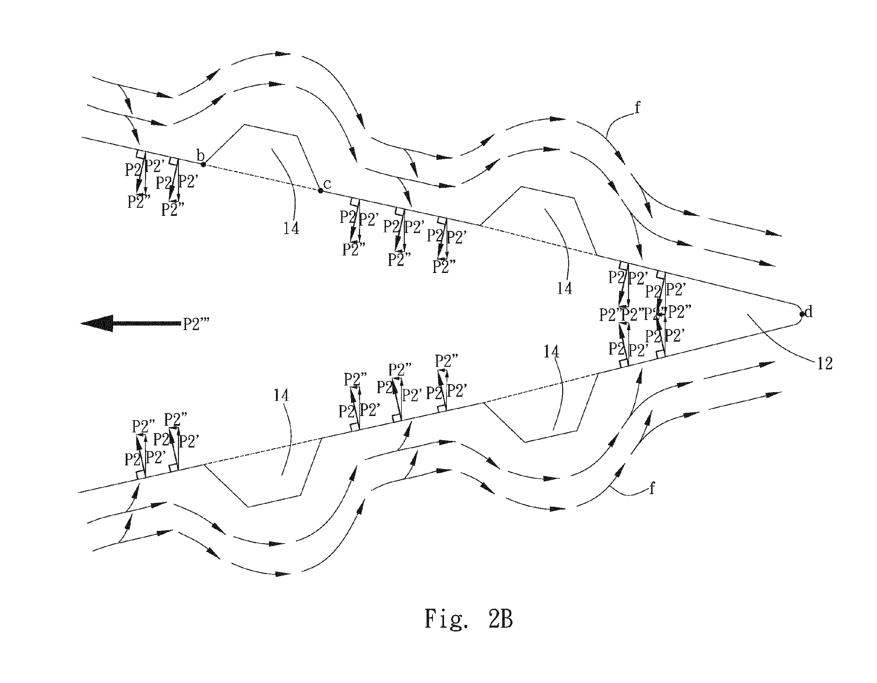

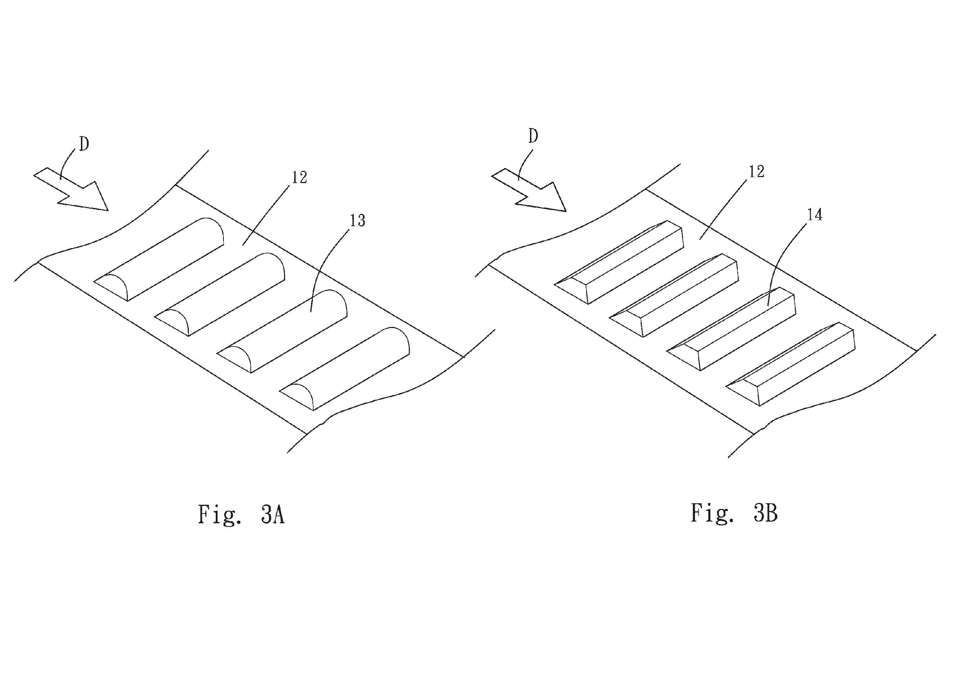

Refer to Figs. 2A and 2B. The raised structures 13, 14 according to the present invention are by no means limited to symmetrical humps, and such raised structures essentially act to impede boundary layer and create turbulence in order to increase the fluid momentum, thereby enhancing the pressure applied on the surface of the streamlined body 1. Also, refer to Fig. 3A, wherein the raised structure 13 in the present embodiment is a bar-shaped raised structure of semi-cylindrical column and installed on the surface of the caudal end 12 of the streamlined body 1, in which the raised structure can be as well a raised structure of regular or irregular profiles. Moreover, referring to Fig. 3B, the raised structure 14 is a bar-shaped raised structure of trapezoidal column and installed on the surface of the caudal end 12 of the streamlined body 1.

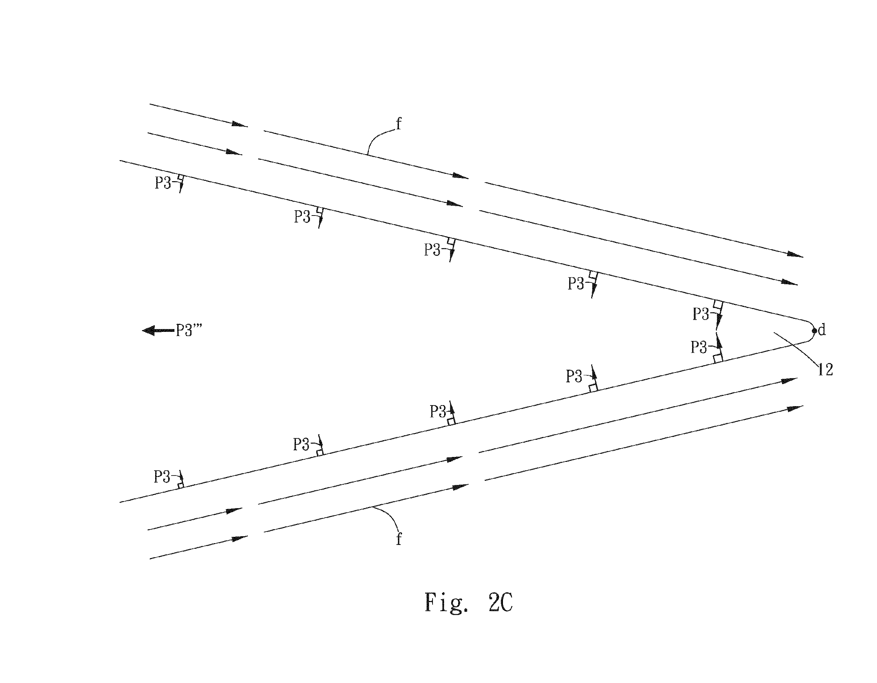

Refer now to Figs. 1 and 2A. The fluid f contacts the raised structure 13 after it passes by the widest point A of the streamlined body 1 then to the point b; at this moment, the fluid f is forced to change its direction to flow along the surface of the raised structure 13 and also exerts pressure P1 on the surface of the caudal end 12 of the streamlined body 1 before the raised structure 13. Afterward, as the fluid f passes by the highest point of the raised structure 13 and then is guided to the point c of the raised structure 13, it is again forced to change the flow direction and exerts pressure P1 on the surface of the caudal end 12 of the streamlined body 1, in which the areas where the pressure P1 is applied are respectively marked as the front and rear gap for each of the aforementioned raised structures 13. Besides, pressure P1 can be decomposed into the vertical action forces component P1' and the horizontal action forces component P1", wherein the vertical action forces component P1' are up/down mutually cancelled due to the symmetric structure of the streamlined body 1, but the horizontal action forces component P1" are summed up to increase because of the symmetric structure of the streamlined body 1 thus forming a forward composite horizontal action force P1"' to facilitate reduction of resistance the streamlined body 1 encounters. Next, referring conjunctively to Figs. 1 and 2C, wherein Fig. 2C shows a diagram for the fluid flow of a prior art without installation of the raised structure. When the fluid f flows from the front end 11 of the streamlined body 1 to the widest point A, the flow speed increases and pressure decreases gradually; at the widest point A, it reaches the highest flow speed and lowest pressure; after there, as the fluid f keeps flowing toward the caudal end 12, the flow speed decreases and pressure rises up, so the pressure difference between the front end 11 and the caudal end 12 becomes less because of pressure P3 applied on the caudal end 12. However, without installation of the raised structures, the pressure P3 at the caudal end 12 is quite limited, so the pressure at the caudal end 12 is still insufficient to offer effective resistance reduction on the streamlined body. As a result, by comparing Fig. 2A and Fig. 2C, it can be seen that the raised structures 13 according to the present invention can indeed effectively increase the pressure at the caudal end 12 during the streamlined body 1 is cruising.

Refer to Figs. 1 and 2B, wherein, in another embodiment of the present invention, the raised structure 14 can be a trapezoidal raise structure. Upon the fluid f reaching the point b in front of the raised structure 14, the fluid f is forced to change its direction to flow along the surface of the raised structure 14 and imposes pressure P2 on the surface of the caudal end 12 of the streamlined body 1 before the raised structure 14. After that, the fluid f is again forced to change flow direction when it is guided to the caudal end 12 of the streamlined body 1, and exerts pressure P2 on the surface of the caudal end 12 of the streamlined body 1. Similarly, said pressure P2 can be decomposed into the vertical action forces component P2' and the horizontal action forces component P2", wherein the vertical action forces component P2' are up/down mutually cancelled due to the symmetric structure of the streamlined body 1, but the horizontal action forces component P2" are summed up to increase because of the symmetric structure of the streamlined body 1 thus forming a forward composite horizontal action force P2"' to facilitate reduction of resistance the streamlined body 1 encounters.

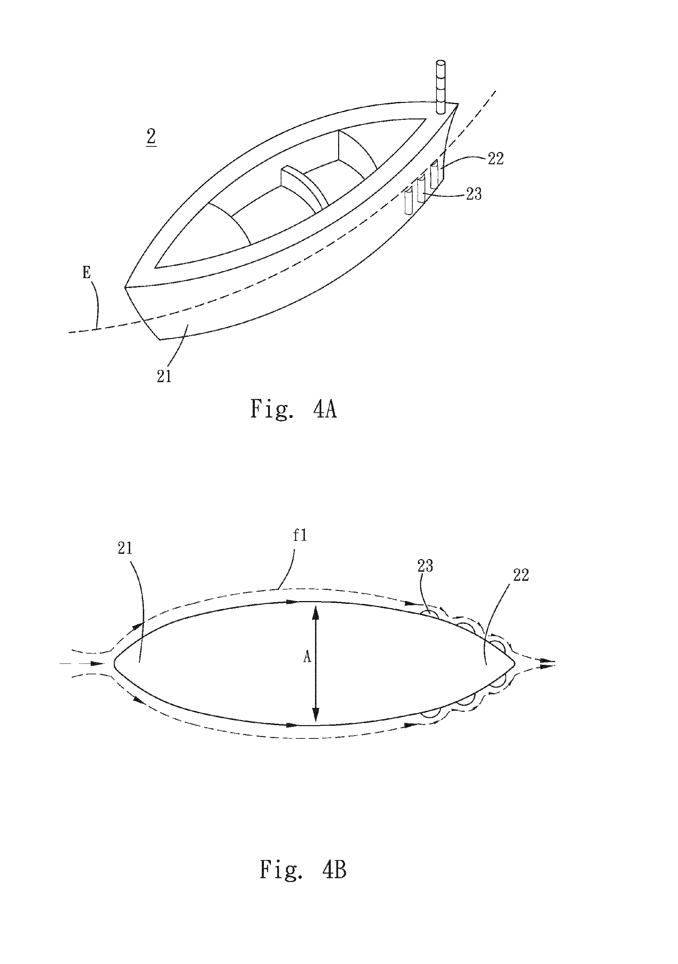

Refer to Figs. 4A and 4B which illustrate an embodiment of the present invention implemented on the hull structure of a vessel 2.

Herein multiple raised portions 23 are installed at the stern 22 of the hull of the vessel 2. The raised portions 23 are disposed below the waterline E, and the installing position for such raised portions 23 can be shown as Fig. 4B, which are set up between the widest point A and the stern 22 of the vessel 2. A gap can be configured between the raised portions 23, and such raised portions 23 essentially act to impede the boundary layer and create turbulence in order to increase the fluid momentum, thereby enhancing the pressure exerted on the surface of the vessel 2. The raised portion 23 in the present embodiment is a bar-shaped raised structure of semi-cylindrical column, and the raised portion 23 may be a raised structure of regular or irregular shapes (not shown). The fluid fl passes by the widest point A of the hull and then comes into contact with the raised portion 23 thus being forced to change its flow direction, such that the fluid fl exerts pressure on the surface of the stern 22 of the vessel 2 before the raised portion 23 and continues traveling along the surface of the sequent raised portion 23. When the fluid fl is guided toward the surface of the stern 22, it is again forced to change the flow direction and the pressure on the surface of the stern 22 is increased. Referring conjunctively to Fig. 2A, as previously illustrated, pressure P1 can be decomposed into the vertical action forces component P1' and the horizontal action forces component P1", wherein the vertical action forces component P1' are up/down mutually cancelled due to the symmetric structure of the streamlined body 1, but the horizontal action forces component P1" are summed up to increase because of the symmetric structure of the streamlined body 1 thus forming a forward composite horizontal action force P1"' to facilitate resistance reduction and increase the speed of a travelling vessel.

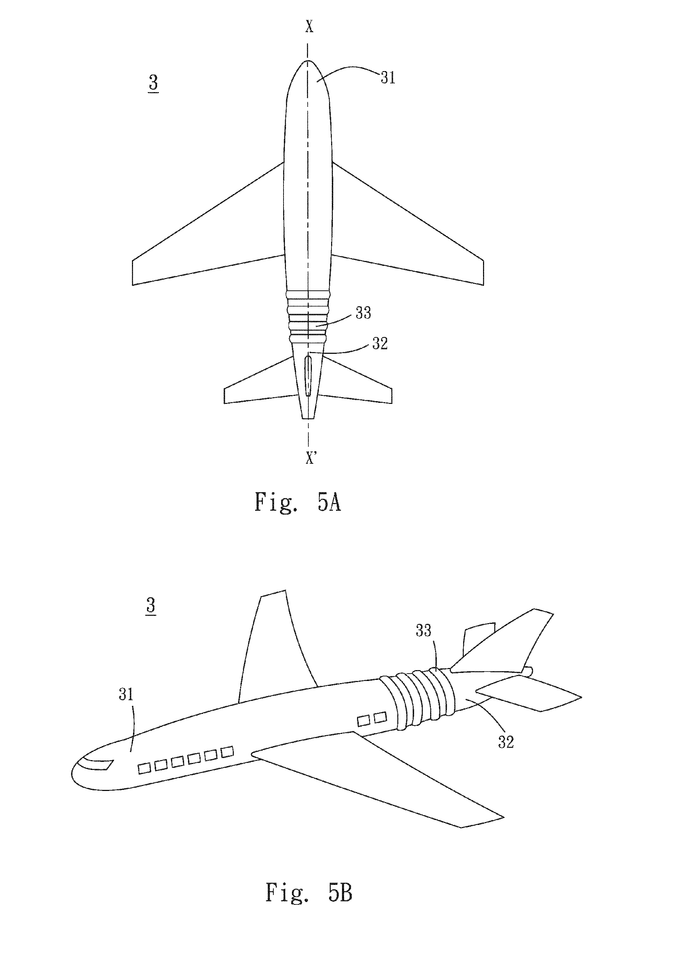

Refer to Figs. 5A to 5C which illustrate an embodiment of the present invention implemented on the tail structure of an aircraft 3.

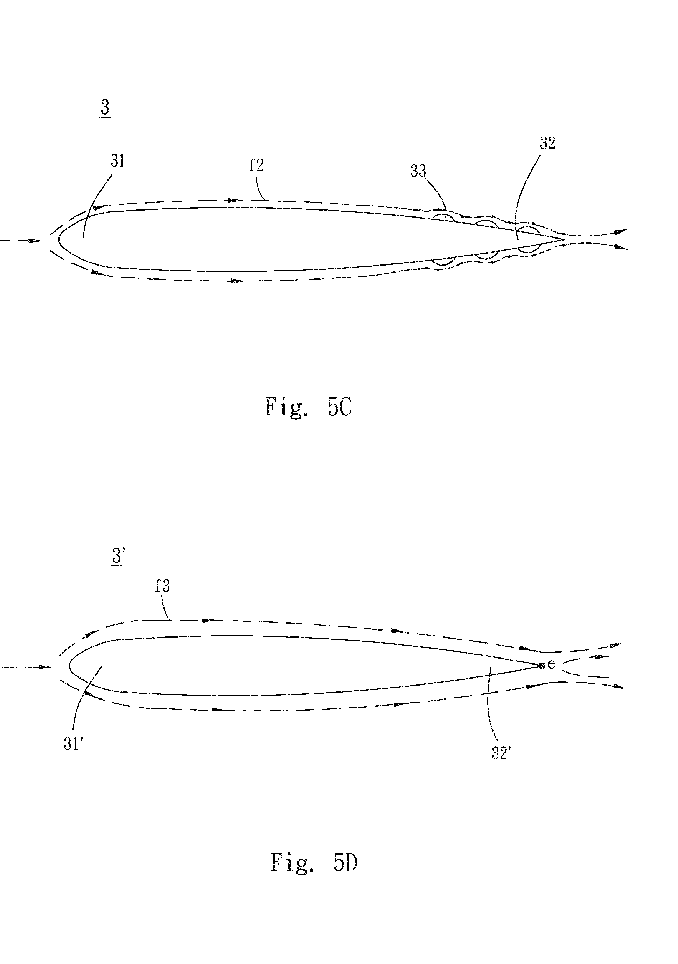

Refer to Figs. 5A and 5B, in which multiple raised portions 33 are installed on the hull of an aircraft 3. Such raised portions 33 surround the top surface, bottom surface or two lateral surfaces at the caudal end of hull 32 and the installing positions thereof are between the widest point and the caudal end of hull 32, and a gap can be configured between the raised portions 33. The raised portion 33 in the present embodiment is a bar-shaped raised structure of semi-cylindrical column surrounding the tail of the aircraft, and the raised portion 33 may be a raised structure of regular or irregular profiles (not shown). After the airflow passes by the widest point of the hull of an aircraft along the central line of hull X-X' from the front end hull 31, it contacts the raised portion 33 (referring conjunctively to Fig. 5C) such that the airflow f2 exerts pressure on the surface of the caudal end of hull 32 before the raised portion 33 and continues flowing along the surface of the raised portion 33. When the airflow f2 is guided by the sequent raised portion 33 to travel toward the surface of the caudal end of hull 32, it is once again forced to change the flow direction and the pressure on the caudal end of hull 32 is increased so as to reduce the fluid resistance and increase the speed of a cruising aircraft.

Fig. 5D is a cross-section view illustrating an example without installation of the raised portions at the caudal end of hull 32' of an aircraft, and Fig. 5C is conjunctively referred. Through comparisons, it can be seen that, without installation of the raised portions on the aircraft 3', when airflow f3 travels from the front end of hull 31' to the point e at the caudal end of hull 32', a low pressure area is created around the caudal end of hull 32'; on the contrary, for the aircraft 3 configured with the raised portions 33, since the pressure to which the caudal end of hull 32 thereof is subject becomes greater than the pressure that the caudal end of hull 32' of the aircraft 3' not configured with the raised portions, the fluid resistance on the aircraft 3 is less which can be helpful to increase speed.

In summary, based on the descriptions set forth hereinbefore, the present invention can indeed achieve the aforementioned purposes by using the raised structures configured between the widest point and the caudal end of the streamlined body such that the pressure at the caudal end of the streamlined body can be increased thus reducing the resistance that the streamlined body may encounter during movement; hence, the cruising speed of a streamlined body can be effectively improved by the present invention. Moreover, the present invention can be comprehensively applied on various streamlined bodies like a vessel, an aircraft or an automobile, accordingly providing practical and beneficial values and demonstrating critical elements of industrial usability, innovation as well as technical advancement.

The descriptions set forth as above illustrate simply certain preferred embodiments of the present invention, and all effectively equivalent modifications in design made within the scope of the present invention are intended to be encompassed by the technical range of the present invention.

### Major Component Symbol Description

- 1, 1': Streamlined Body
- 11, 11': Front End
- 12, 12': Caudal End
- 13, 14: Raised Structure
- 2: Vessel
- 21: Bow
- 22: Stern
- 23, 33: Raised Portion
- 3: Aircraft
- 31, 31': Front End of hull
- 32,32': Caudal End of hull
- A: Widest Point
- D: Flow Direction of Fluid
- E: Waterline
- P1, P2, P3: Pressure
- P1', P2': Vertical Action Force
- P1", P2": Horizontal Action Force
- P1"', P2"', P3'": Composite Horizontal Action Force
- f: Fluid
- f1: Water flow
- f2, f3: Airflow
- a: End of Widest Point in Streamlined Body
- b: Front Interface Point between Streamlined Body and Raised Structure
- c: Rear Interface Point between Streamlined Body and Raised Structure
- d: Caudal End of Streamlined Body
- e: Caudal End of hull
- X-X': Central Line of hull
- a': Front End of Conventional Streamlined Body
- b': End of Widest Point in Conventional Streamlined Body
- c': Caudal End of Conventional Streamlined Body
- 13': Trace Flow of Conventional Streamlined Body

## Claims

1. A method of reducing resistance of streamlined body of a vehicle and its applications is provided, wherein one or more raised structures are configured between the widest point of the streamlined body and the caudal end of the streamlined body, and a gap can be configured between such raised structures.

2. The method of reducing resistance of streamlined body of a vehicle and its applications according to Claim 1, wherein the raised structure is a bar-shaped raised structure of semi-cylindrical column.

3. The method of reducing resistance of streamlined body of a vehicle and its applications according to Claim 1, wherein the raised structure is a bar-shaped raised structure of trapezoidal column.

4. The method of reducing resistance of streamlined body of a vehicle and its applications according to Claim 1, wherein the raised structure can be a raised structure of regular profiles or a raised structure of irregular profiles.

5. The method of reducing resistance of streamlined body of a vehicle and its applications according to Claim 1, wherein the raised structure is a bar-shaped raised structure.

6. A method of reducing resistance of streamlined body of a vehicle and its applications is provided, which is applied on the hull of a vessel and wherein one or more raised structures are configured between the widest point and the end of the stern, and gaps can be configured between every two raised structures.

7. A method of reducing resistance of streamlined body of a vehicle and its applications is provided, which is applied on the top side, bottom side or two lateral sides of the hull of an aircraft and wherein one or more raised structures are configured between the widest point and the end of the tail, and a gap can be configured between every two raised structures.

8. The method of reducing resistance of streamlined body of a vehicle and its applications according to Claim 6 or Claim 7, wherein the raised structure is a bar-shaped raised structure of semi-cylindrical column.

9. The method of reducing resistance of streamlined body of vehicle and its applications according to Claim 6 or Claim 7, wherein the raised structure is a bar-shaped raised structure of trapezoidal column.

10. The method of reducing resistance of streamlined body of a vehicle and its applications according to Claim 6 or Claim 7, wherein the raised structure can be a raised structure of regular profiles, a raised structure of irregular profiles or a bar-shaped raised structure.
